# DEMANDE DE BREVET EUROPEEN

(11) **EP 4 711 730 A1**
(43) Date de publication de la demande: **18.03.2026**
(21) Numéro de dépôt: 25202350.2
(22) Date de dépôt: 16.09.2025
(51) Int. Cl.: G01M 3/04, G01M 3/18, H01R 13/66

(54) **PROCÉDÉ DE DÉTECTION D'UNE PERTE D'ÉTANCHÉITÉ D'UN DISPOSITIF DE CONNEXION ÉLECTRIQUE ET DISPOSITIF DE CONNEXION ÉLECTRIQUE ASSOCIÉ**

(30) Priorité: 17.09.2024 FR 2409879
(71) Demandeur: NAVAL Group, 75015 Paris (FR)
(72) Inventeur: TOQUET, Nicolas, 50104 CHERBOURG-OCTEVILLE CEDEX (FR); KERAUDREN, Philippe, 50104 CHERBOURG-OCTEVILLE CEDEX (FR)
(74) Mandataire: Lavoix

(57) **Abrégé**

L'invention concerne un procédé de détection d'une perte d'étanchéité d'un dispositif (10) de connexion électrique, comprenant : une ligne électrique (12) ; un connecteur (14) électrique, assemblé à ladite ligne électrique ; et un organe d'étanchéité (16) ; la ligne électrique, le connecteur et l'organe d'étanchéité définissant une chambre d'étanchéité (71).

Le dispositif comprend en outre un module de détection (18), apte à mesurer une première caractéristique électrique du dispositif, ledit module de détection comprenant un élément hygrosensible (76) disposé dans la chambre d'étanchéité (71), le module de détection étant configuré de sorte que la première caractéristique électrique mesurée par ledit premier module varie en fonction d'une humidité au contact de l'élément hygrosensible (76).

## Description

La présente invention concerne un procédé de détection d'une perte d'étanchéité d'un dispositif de connexion électrique, ledit dispositif de connexion électrique comprenant : une première ligne électrique, s'étendant selon un axe principal et comportant une première extrémité ; un connecteur électrique, assemblé à ladite première extrémité et apte à former jonction entre ladite première ligne électrique et une deuxième ligne électrique ; et un premier organe d'étanchéité, disposé entre ladite première ligne électrique et ledit connecteur ; la première ligne électrique, le connecteur et le premier organe d'étanchéité définissant une première chambre d'étanchéité.

L'invention s'applique particulièrement aux dispositifs de connexion électrique immergés, entrant notamment dans la fabrication de câbles sous-marins.

Il est avantageux de détecter et de localiser le plus tôt possible toute perte d'étanchéité dans un tel câble sous-marin, pour permettre une intervention avant dégradation complète des performances.

La présente invention a pour but de proposer un système de détection et de localisation efficace, facile à mettre en œuvre et peu encombrant.

A cet effet, l'invention a pour objet un procédé de détection du type précité, dans lequel : le dispositif de connexion électrique comprend en outre un premier module de détection, apte à mesurer une première caractéristique électrique du dispositif de connexion électrique, ledit premier module de détection comprenant un premier élément hygrosensible disposé dans la première chambre d'étanchéité, le premier module de détection étant configuré de sorte que la première caractéristique électrique mesurée par ledit premier module varie en fonction d'une humidité au contact du premier élément hygrosensible ; et le procédé comprend les étapes suivantes : mesure, par le premier module de détection, de la première caractéristique électrique du dispositif de connexion électrique ; comparaison de la première caractéristique électrique mesurée à une première plage de valeurs prédéterminée ; et si la première caractéristique électrique mesurée est à l'écart de ladite première plage de valeurs, émission d'un premier signal de perte d'étanchéité du dispositif de connexion électrique.

Suivant d'autres aspects avantageux de l'invention, le procédé de détection comporte l'une ou plusieurs des caractéristiques suivantes, prises isolément ou suivant toutes les combinaisons techniquement possibles :
- le premier module de détection comprend en outre : un premier organe de connexion électrique, disposé dans la première chambre d'étanchéité au contact du premier élément hygrosensible ; et un réflectomètre, relié au premier organe de connexion électrique ; et la mesure de la première caractéristique électrique comporte les étapes suivantes : envoi par le réflectomètre d'un signal de sonde vers le premier organe de connexion électrique ; réception d'un signal réfléchi, émis par le premier organe de connexion électrique vers le réflectomètre ; et comparaison dudit signal réfléchi avec le signal de sonde émis ;
- le dispositif de connexion électrique comprend en outre un deuxième organe d'étanchéité, disposé entre la première ligne électrique et le connecteur ; la première ligne électrique, le connecteur et les premier et deuxième organes d'étanchéité définissant la première chambre d'étanchéité ; la première ligne électrique, le connecteur et le deuxième organe d'étanchéité définissant une deuxième chambre d'étanchéité, alignée avec la première chambre d'étanchéité selon l'axe principal ; le dispositif de connexion électrique comprend en outre un deuxième module de détection, apte à mesurer une deuxième caractéristique électrique du dispositif de connexion électrique, ledit deuxième module de détection comprenant un deuxième élément hygrosensible disposé dans la deuxième chambre d'étanchéité, le deuxième module de détection étant configuré de sorte que la deuxième caractéristique électrique mesurée par ledit deuxième module varie en fonction d'une humidité au contact du deuxième élément hygrosensible ; et le procédé comprend en outre les étapes suivantes : mesure, par le deuxième module de détection, de la deuxième caractéristique électrique du dispositif de connexion électrique ; comparaison de la deuxième caractéristique électrique mesurée à une deuxième plage de valeurs prédéterminée ; et si la deuxième caractéristique électrique mesurée est à l'écart de ladite deuxième plage de valeurs, émission d'un deuxième signal de perte d'étanchéité du dispositif de connexion électrique.

L'invention se rapporte en outre à un dispositif de connexion électrique comprenant : une première ligne électrique, s'étendant selon un axe principal et comportant une première extrémité ; un connecteur électrique, assemblé à ladite première extrémité et apte à former jonction entre ladite première ligne électrique et une deuxième ligne électrique ; et un premier organe d'étanchéité, disposé entre ladite première ligne électrique et ledit connecteur ; la première ligne électrique, le connecteur et le premier organe d'étanchéité définissant une première chambre d'étanchéité ; le dispositif de connexion électrique comprenant en outre un premier module de détection, apte à mesurer une première caractéristique électrique du dispositif de connexion électrique, ledit premier module de détection comprenant un premier élément hygrosensible disposé dans la première chambre d'étanchéité, le premier module de détection étant configuré de sorte que la première caractéristique électrique mesurée par ledit premier module varie en fonction d'une humidité au contact du premier élément hygrosensible ; le dispositif de connexion électrique étant configuré pour mettre en œuvre un procédé de détection d'une perte d'étanchéité tel que décrit ci-dessus.

Suivant d'autres aspects avantageux de l'invention, le dispositif de connexion électrique comporte l'une ou plusieurs des caractéristiques suivantes, prises isolément ou suivant toutes les combinaisons techniquement possibles :
- le dispositif de connexion comprend en outre : un deuxième organe d'étanchéité, disposé entre la première ligne électrique et le connecteur ; la première ligne électrique, le connecteur et les premier et deuxième organes d'étanchéité définissant la première chambre d'étanchéité ; la première ligne électrique, le connecteur et le deuxième organe d'étanchéité définissant une deuxième chambre d'étanchéité, alignée avec la première chambre d'étanchéité selon l'axe principal ; et un deuxième module de détection, apte à mesurer une deuxième caractéristique électrique du dispositif de connexion électrique, ledit deuxième module de détection comprenant un deuxième élément hygrosensible disposé dans la deuxième chambre d'étanchéité, le deuxième module de détection étant configuré de sorte que la deuxième caractéristique électrique mesurée par ledit deuxième module varie en fonction d'une humidité au contact du deuxième élément hygrosensible ;
- le premier module de détection comprend en outre : un premier organe de connexion électrique, disposé dans la première chambre d'étanchéité au contact du premier élément hygrosensible ; et un réflectomètre, relié au premier organe de connexion électrique ;
- la première ligne électrique comporte au moins un câble électrique et une armure métallique, disposée autour de l'au moins un câble électrique ; le connecteur électrique comprend un manchon, électriquement conducteur, disposé selon l'axe principal, autour de la première extrémité de la première ligne électrique ; l'armure métallique de la première ligne électrique est électriquement reliée au manchon du connecteur électrique ; et le premier organe de connexion électrique est disposé dans la première chambre d'étanchéité, autour de l'au moins un câble électrique et à distance de l'armure métallique de la première ligne électrique ;
- le premier élément hygrosensible est disposé de sorte à maintenir une première impédance entre le premier organe de connexion électrique et l'armure métallique de la première ligne électrique, ladite première impédance étant variable en fonction d'une humidité au contact du premier élément hygrosensible, la première caractéristique électrique mesurée par le premier module de détection étant fonction de ladite première impédance ;
- le premier module de détection comprend en outre une première unité de connexion, ladite première unité de connexion comprenant deux bornes respectivement reliées au premier organe de connexion électrique et à l'armure métallique, ladite première unité de connexion étant solidaire du manchon du connecteur ;
- le premier module de détection comprend en outre un premier fil de connexion s'étendant parallèlement à l'axe principal, l'armure métallique de la première ligne électrique étant disposée autour dudit premier fil de connexion ; une première extrémité dudit fil de connexion étant reliée au premier organe de connexion électrique.

L'invention apparaîtra plus clairement à la lecture de la description qui va suivre, donnée uniquement à titre d'exemple non limitatif, et faite en référence aux dessins dans lesquels :
- la figure 1 est une vue schématique en coupe d'un dispositif de connexion électrique selon un premier mode de réalisation de l'invention ;
- la figure 2 est une vue schématique en coupe d'un dispositif de connexion électrique selon un deuxième mode de réalisation de l'invention ; et
- la figure 3 est un logigramme représentant un procédé de détection d'une perte d'étanchéité selon un mode de réalisation de l'invention.

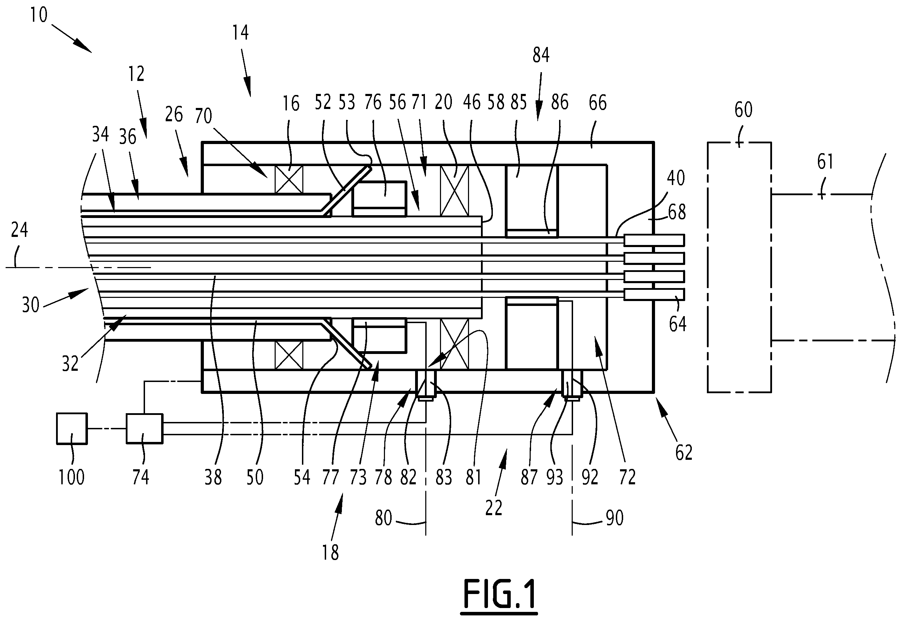

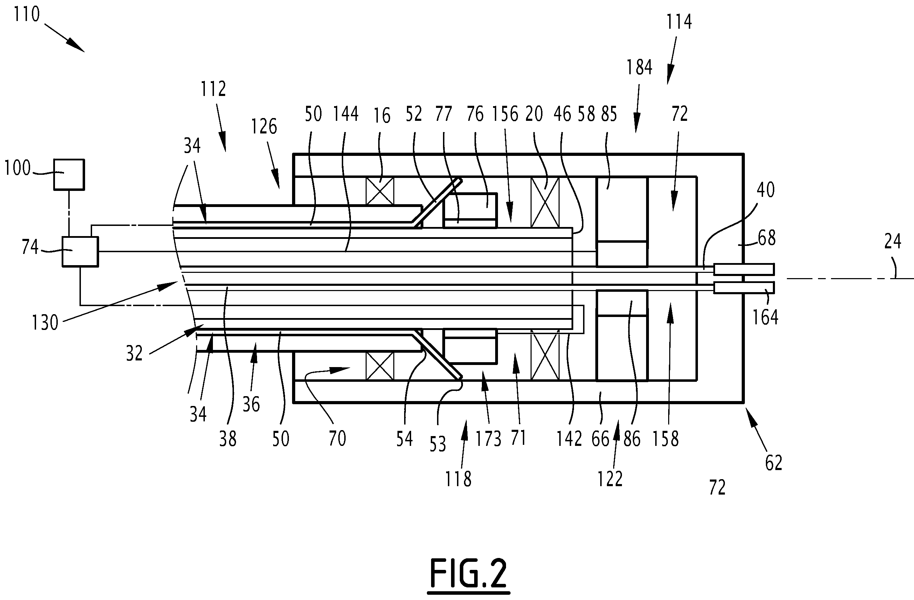

La figure 1 représente un dispositif 10 de connexion électrique selon un premier mode de réalisation de l'invention. La figure 2 représente un dispositif 110 de connexion électrique selon un deuxième mode de réalisation de l'invention.

Les dispositifs 10 et 110 seront décrits simultanément ci-après, les éléments communs étant désignés par les mêmes numéros de référence.

Le dispositif 10, 110 est notamment destiné à être mis en œuvre dans la réalisation d'un câble électrique immergé, en particulier un câble sous-marin.

Le dispositif 10, 110 comprend : une ligne électrique 12, 112 ; un connecteur 14, 114 ; un premier organe d'étanchéité 16 ; et un premier module de détection 18, 118.

Dans les modes de réalisation représentés, le dispositif 10, 110 comprend en outre : un deuxième organe d'étanchéité 20 ; et un deuxième module de détection 22, 122.

La ligne électrique 12, 112 s'étend selon un axe principal 24 et comporte une portion d'extrémité 26, 126, qui forme une première extrémité de ladite ligne électrique selon ledit axe principal.

La ligne électrique 12, 112 comprend : un cœur électrique 30, 130 ; une gaine d'étanchéité 32 ; une armure 34 ; et une gaine de protection 36.

Le cœur électrique 30, 130 comporte une pluralité de câbles unitaires 38, arrangés en faisceau. Chaque câble unitaire 38 s'étend sensiblement selon l'axe principal 24, jusqu'à une extrémité axiale 40.

Dans le mode de réalisation de la figure 2, le cœur électrique 130 comporte en outre au moins un premier fil de connexion 142 et de préférence un deuxième fil de connexion 144.

La gaine d'étanchéité 32 est disposée autour du cœur électrique 30, 130 et s'étend selon l'axe principal 24, jusqu'à une extrémité axiale 46. La gaine d'étanchéité 32 est formée d'un matériau isolant électrique et apte à protéger le cœur électrique 30, 130 de l'humidité.

L'armure 34 s'étend selon l'axe principal 24 autour de la gaine d'étanchéité 32. L'armure 34 est formée d'un matériau métallique. De préférence, l'armure 34 a également une fonction de blindage électromagnétique du cœur électrique 30, 130.

L'armure 34 comporte une partie principale 50 et une partie d'extrémité 52. La partie principale 50 est sensiblement cylindrique et au contact de la gaine d'étanchéité 32. La partie d'extrémité 52 est sensiblement tronconique et s'évase axialement à partir de la partie principale 50, jusqu'à une extrémité axiale 53.

La gaine de protection 36 est disposée autour de la partie principale 50 de l'armure 34. Ladite gaine de protection 36 s'étend selon l'axe principal 24, jusqu'à une extrémité axiale 54. La gaine de protection 36 est formée d'un matériau isolant électrique et apte à protéger la ligne électrique.

Dans le mode de réalisation représenté, la portion d'extrémité 26, 126 comporte une première 56, 156 et une deuxième 58, 158 zones d'extrémité.

La première zone d'extrémité 56, 156 est comprise entre l'extrémité axiale 54 de la gaine de protection 36 et l'extrémité axiale 46 de la gaine d'étanchéité 32. Dans la première zone d'extrémité 56, 156, la gaine d'étanchéité 32 est dénudée et la partie d'extrémité 52 tronconique de l'armure 34 est déployée autour de ladite gaine d'étanchéité 32.

La deuxième zone d'extrémité 58, 158 est comprise entre l'extrémité axiale 46 de la gaine d'étanchéité 32 et les extrémités axiales 40 des câbles unitaires 38. Dans ladite deuxième zone d'extrémité 58, 158, le faisceau de câbles unitaires 38 est dénudé.

Le connecteur 14, 114 est configuré pour connecter le dispositif 10, 110 à un autre dispositif 60, 61 similaire, représenté en pointillés sur la figure 1, de sorte à former un câble électrique.

Le connecteur 14, 114 comporte un corps de connecteur 62 et une pluralité d'éléments 64, 164 de connexion.

Le corps de connecteur 62 est réalisé en matériau électriquement conducteur, préférentiellement métallique. Le corps de connecteur 62 comporte un manchon 66 et une paroi frontale 68.

Le manchon 66 présente une forme tubulaire et s'étend selon l'axe principal 24, autour de la portion d'extrémité 26, 126 de la ligne électrique 12, 112. Le manchon 66 s'étend également autour de la gaine de protection 36 de ladite ligne électrique, à proximité de l'extrémité axiale 54 de ladite gaine. Un espace annulaire 70 est ménagé radialement entre ledit manchon 66 et ladite gaine de protection 36.

La paroi frontale 68 est perpendiculaire à l'axe principal 24 et forme une extrémité axiale du manchon 66.

Les éléments 64, 164 de connexion sont insérés dans la paroi frontale 68 du corps de connecteur 62. Une première extrémité de chaque élément 64, 164 de connexion est assemblée à l'extrémité axiale de l'un des câbles unitaires 38 du cœur électrique 30, 130. Une seconde extrémité de chaque élément 64, 164 de connexion est apte à connecter le connecteur 14, 114 à un autre connecteur 60 complémentaire, assemblé à une autre ligne électrique 61.

Le premier organe d'étanchéité 16 est disposé dans l'espace annulaire 70 et s'étend radialement entre la gaine de protection 36 de la ligne électrique 12, 112 et le manchon 66 du connecteur 14, 114.

De manière similaire, le deuxième organe d'étanchéité 20 est disposé axialement au niveau de la première zone d'extrémité 56, 156 et s'étend radialement entre la gaine d'étanchéité 32 dénudée et le manchon 66 du connecteur 14, 114.

Les premier 16 et deuxième 20 organes d'étanchéité sont de préférence des joints d'étanchéité, aptes à empêcher le passage de l'humidité de l'extérieur du dispositif 10, 110 vers l'intérieur du connecteur 14, 114.

Une première chambre d'étanchéité 71, disposée à l'intérieur du manchon 66, est définie axialement entre les premier 16 et deuxième 20 organes d'étanchéité. Une deuxième chambre d'étanchéité 72, disposée à l'intérieur du manchon 66, est définie axialement entre le deuxième organe d'étanchéité 20 et la paroi frontale 68.

La partie d'extrémité 52 de l'armure 34 de la ligne électrique 12, 112 s'étend dans la première chambre d'étanchéité 71. L'extrémité axiale 53 de ladite partie d'extrémité 52 est reliée électriquement au manchon 66, par exemple par brasage.

Le premier module de détection 18, 118 va à présent être décrit.

Dans les modes de réalisation représentés, le premier module de détection 18, 118 comprend : un premier dispositif de détection 73, 173 ; et un premier réflectomètre 74.

Le premier dispositif de détection 73, 173 est disposé au niveau de la première chambre d'étanchéité 71 et comprend : un premier élément hygrosensible 76 ; et un premier organe 77 de connexion électrique. Dans le mode de réalisation de la figure 1, le premier dispositif de détection 73 comprend en outre une première unité de connexion 78.

Le premier élément hygrosensible 76 est formé d'un matériau isolant électrique, de type polymère ou céramique. Comme décrit ci-après, ledit matériau est choisi pour ses propriétés hygrosensibles, aptes à varier en présence d'humidité dans la première chambre d'étanchéité 71. Un tel matériau aux propriétés hygrosensibles est notamment un polymère ou une céramique dont les propriétés électriques évoluent en fonction de l'hygrométrie.

Dans les modes de réalisation représentés, le premier élément hygrosensible 76 présente la forme d'une bague disposée selon l'axe principal 24. Plus précisément, le premier élément hygrosensible 76 est disposé au niveau de la première zone d'extrémité 56, 156 de la ligne électrique 12, 112, autour de la gaine d'étanchéité 32 dénudée.

De plus, le premier élément hygrosensible 76 est disposé au contact de la partie d'extrémité 52 de l'armure 34 de la ligne électrique 12, 112.

Dans les modes de réalisation représentés, le premier organe 77 de connexion électrique présente la forme d'une bague disposée selon l'axe principal 24, au niveau de la première zone d'extrémité 56, 156 et au contact de la gaine d'étanchéité 32 dénudée. Le premier élément hygrosensible 76 est disposé autour du premier organe 77 de connexion électrique et au contact dudit premier organe 77.

Le premier organe 77 de connexion électrique est disposé à l'écart de l'armure 34 de la ligne électrique 12, 112, le premier élément hygrosensible 76 étant interposé entre ledit premier organe 77 de connexion électrique et la partie d'extrémité 52 de l'armure 34.

Comme détaillé ci-après, le premier élément hygrosensible 76 est disposé de sorte à maintenir une première impédance entre le premier organe 77 de connexion électrique et l'armure 34 de la ligne électrique 12, 112, ladite première impédance étant variable en fonction d'une humidité au contact du premier élément hygrosensible 76.

Dans le mode de réalisation de la figure 2, une première extrémité du premier fil de connexion 142 du cœur électrique 130 de la ligne électrique 112 est électriquement reliée au premier organe 77 de connexion électrique ; et une seconde extrémité dudit premier fil de connexion 142 est reliée au premier réflectomètre 74. En outre l'armure 34 de la ligne électrique 12 est reliée au premier réflectomètre 74.

Dans le mode de réalisation de la figure 1, la première unité de connexion 78 est un connecteur coaxial de type SMA. Plus précisément, la première unité de connexion 78 s'étend selon un premier axe 80 de connecteur, entre une extrémité distale 81 et une extrémité proximale.

La première unité de connexion 78 est insérée dans le manchon 66 du connecteur 14, de sorte que le premier axe 80 de connecteur soit sensiblement perpendiculaire à l'axe principal 24. L'extrémité distale 81 est disposée dans la première chambre d'étanchéité 71 et l'extrémité proximale émerge à l'extérieur du manchon 66.

La première unité de connexion 78 comporte une broche centrale 82 entourée d'un cylindre 83. Le cylindre 83 est électriquement en contact avec le manchon 66. Au niveau de l'extrémité distale 81 et de l'extrémité proximale, la broche centrale 82 est électriquement reliée, respectivement au premier organe 77 de connexion électrique et au premier réflectomètre 74. Par ailleurs, le manchon 66 du connecteur 14 est relié au premier réflectomètre 74.

Le premier module de détection 18, 118 est apte à mesurer une première caractéristique électrique du dispositif 10, 110 de connexion électrique, ladite première caractéristique électrique étant fonction de la première impédance entre le premier organe 77 de connexion électrique et l'armure 34 de la ligne électrique 12, 112.

En particulier, le premier réflectomètre 74, ci-après dénommé « le réflectomètre 74 », est apte à mettre en œuvre les étapes suivantes : envoi d'un signal de sonde vers le premier organe 77 de connexion électrique ; et réception d'un signal réfléchi, émis par ledit premier organe 77 de connexion électrique.

De préférence, le signal de sonde émis par le réflectomètre 74 est un signal hyperfréquence.

De préférence, le réflectomètre 74 est apte à mettre ensuite en œuvre une étape de comparaison du signal réfléchi avec le signal de sonde émis, de manière à déterminer le coefficient de réflexion entre lesdits signaux. La première caractéristique électrique est fonction dudit coefficient de réflexion, qui dépend de la première impédance entre le premier organe 77 de connexion électrique et l'armure 34. Comme précisé ci-dessus, ladite première impédance dépend d'un état du premier élément hygrosensible 76.

Le deuxième module de détection 22, 122 va à présent être décrit.

Dans les modes de réalisation représentés, le deuxième module de détection 22, 122 comprend : un deuxième dispositif de détection 84, 184 : et un deuxième réflectomètre. Plus précisément, dans les modes de réalisation représentés, le réflectomètre 74 est inclus à la fois dans le premier 18, 118 et dans le deuxième 22, 122 module de détection. En variante non représentée, les premier 18, 118 et deuxième 22, 122 modules de détection comportent des réflectomètres distincts.

Le deuxième dispositif de détection 84, 184 est disposé au niveau de la deuxième chambre d'étanchéité 72 et comprend : un deuxième élément hygrosensible 85 ; et un deuxième organe 86 de connexion électrique. Dans le mode de réalisation de la figure 1, le deuxième dispositif de détection 84 comprend en outre une deuxième unité de connexion 87.

Le deuxième élément hygrosensible 85 est formé d'un matériau isolant électrique, de type polymère ou céramique. Comme décrit ci-après, ledit matériau est choisi pour ses propriétés hygrosensibles, aptes à varier en présence d'humidité dans la deuxième chambre d'étanchéité 72. Le deuxième élément hygrosensible 85 est par exemple formé d'un matériau similaire à celui du premier élément hygrosensible 76.

Dans les modes de réalisation représentés, le deuxième élément hygrosensible 85 présente la forme d'une bague disposée selon l'axe principal 24. Plus précisément, le deuxième élément hygrosensible 85 est disposé au niveau de la deuxième zone d'extrémité 58, 158 de la ligne électrique 12, 112, autour du faisceau de câbles unitaires 38 dénudé.

De plus, le deuxième élément hygrosensible 85 est disposé au contact du manchon 66 du connecteur 14. Le deuxième élément hygrosensible 85 présente par exemple une épaisseur radiale adaptée à un tel contact.

Dans les modes de réalisation représentés, le deuxième organe 86 de connexion électrique présente la forme d'une bague disposée selon l'axe principal 24, au niveau de la deuxième zone d'extrémité 58, 158 et au contact du faisceau de câbles unitaires 38 dénudé. Le deuxième élément hygrosensible 85 est disposé autour du deuxième organe 86 de connexion électrique et au contact dudit deuxième organe 86. Plus précisément, le deuxième élément hygrosensible 85 est radialement interposé entre le manchon 66 et ledit deuxième organe 86.

Comme détaillé ci-après, le deuxième élément hygrosensible 85 est disposé de sorte à maintenir une deuxième impédance entre le deuxième organe 86 de connexion électrique et le manchon 66 du connecteur 14, 114, ladite deuxième impédance étant variable en fonction d'une humidité au contact du deuxième élément hygrosensible 85.

Dans le mode de réalisation de la figure 2, une première extrémité du deuxième fil de connexion 144 du cœur électrique 130 de la ligne électrique 112 est électriquement reliée au deuxième organe 86 de connexion électrique ; et une seconde extrémité dudit deuxième fil de connexion 144 est reliée au réflectomètre 74.

Dans le mode de réalisation de la figure 1, la deuxième unité de connexion 87 est un connecteur coaxial de type SMA, similaire à la première unité de connexion 78. Plus précisément, la deuxième unité de connexion 87 s'étend selon un deuxième axe 90 de connecteur, entre une extrémité distale et une extrémité proximale.

La deuxième unité de connexion 87 est insérée dans le manchon 66 du connecteur 14, de sorte que le deuxième axe 90 de connecteur soit sensiblement perpendiculaire à l'axe principal 24. L'extrémité distale est disposée dans la deuxième chambre d'étanchéité 72 et l'extrémité proximale émerge à l'extérieur du manchon 66.

La deuxième unité de connexion 87 comporte une broche centrale 92 entourée d'un cylindre 93. Le cylindre 93 est électriquement en contact avec le manchon 66. Au niveau de l'extrémité distale et de l'extrémité proximale, la broche centrale 92 est électriquement reliée, respectivement au deuxième organe 86 de connexion électrique et au réflectomètre 74.

Le deuxième module de détection 22, 122 est apte à mesurer une deuxième caractéristique électrique du dispositif 10, 110 de connexion électrique, ladite deuxième caractéristique électrique étant fonction de la deuxième impédance entre le deuxième organe 86 de connexion électrique et le manchon 66 du connecteur 14, 114.

En particulier, le réflectomètre 74 est apte à mettre en œuvre les étapes suivantes : envoi d'un signal de sonde vers le deuxième organe 86 de connexion électrique ; et réception d'un signal réfléchi, émis par ledit deuxième organe 86 de connexion électrique. De préférence, le signal de sonde émis par le réflectomètre 74 est un signal hyperfréquence.

De préférence, le réflectomètre 74 est apte à mettre ensuite en œuvre une étape de comparaison du signal réfléchi avec le signal de sonde émis, permettant d'obtenir le coefficient de réflexion; et la deuxième caractéristique électrique est fonction dudit coefficient de réflexion, qui dépend de la deuxième impédance entre le deuxième organe 86 de connexion électrique et le manchon 66 du connecteur 14, 114. Comme précisé ci-dessus, ladite deuxième impédance dépend d'un état du deuxième élément hygrosensible 85.

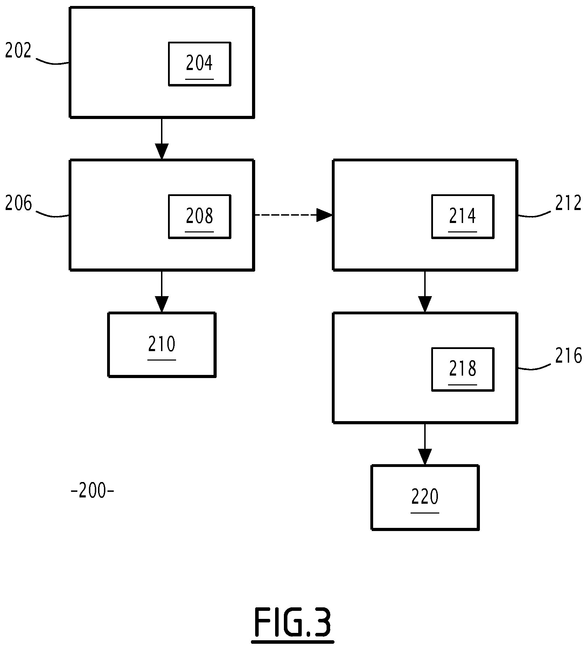

Le dispositif 10, 110 de connexion électrique est muni de moyens de mise en œuvre d'un procédé 200 de détection d'une perte d'étanchéité. Le procédé 200 est schématisé sur la figure 3. Lesdits moyens de mise en œuvre du procédé 200 comprennent par exemple un programme mémorisé dans un centre de commande 100 relié au réflectomètre 74.

Le procédé 200 comporte une première étape 202 de mesure, par le premier module de détection 18, 118, de la première caractéristique électrique 204, décrite ci-dessus, du dispositif 10, 110 de connexion électrique. Comme indiqué précédemment, la première caractéristique électrique 204 dépend préférentiellement de la première impédance entre le premier organe 77 de connexion électrique et l'armure 34.

Comme précédemment décrit, selon un mode de réalisation préférentiel, la première caractéristique électrique 204 est fonction du coefficient de réflexion entre un signal réfléchi par le premier organe 77 de connexion électrique et un signal de sonde initialement émis par le réflectomètre 74 vers ledit premier organe 77.

Le procédé 200 comporte ensuite une deuxième étape 206 de comparaison de la première caractéristique électrique 204 mesurée à une première plage de valeurs 208 prédéterminée. En particulier, la première plage de valeurs 208 est définie de sorte à correspondre à un taux d'humidité, dans la première chambre d'étanchéité 71, inférieur à une valeur souhaitée pour le fonctionnement du dispositif 10, 110.

Le procédé 200 comporte ensuite une troisième étape 210 telle que, si la première caractéristique électrique 204 mesurée est à l'écart de ladite première plage de valeurs 208, un premier signal est émis pour signaler une perte d'étanchéité de la première chambre d'étanchéité 71.

Le procédé 200 comporte en outre une quatrième étape 212 de mesure, par le deuxième module de détection 22, 122, de la deuxième caractéristique électrique 214, décrite ci-dessus, du dispositif 10, 110 de connexion électrique.

Selon un premier mode de réalisation, la quatrième étape 212 est mise en œuvre en parallèle de la troisième étape 210 si la première caractéristique électrique 204 mesurée est à l'écart de la première plage de valeurs 208. Selon un deuxième mode de réalisation, les première 202 et quatrième 212 étapes sont mises en œuvre en parallèle..

Comme indiqué précédemment, la deuxième caractéristique électrique 214 dépend préférentiellement de la deuxième impédance entre le deuxième organe 86 de connexion électrique et le manchon 66.

Comme précédemment décrit, selon un mode de réalisation préférentiel, la deuxième caractéristique électrique 214 est fonction du coefficient de réflexion entre un signal réfléchi par le deuxième organe 86 de connexion électrique et un signal de sonde initialement émis par le réflectomètre 74 vers ledit deuxième organe 86.

Le procédé 200 comporte ensuite une cinquième étape 216 de comparaison de la deuxième caractéristique électrique 214 mesurée à une deuxième plage de valeurs 218 prédéterminée. En particulier, la deuxième plage de valeurs 218 est définie de sorte à correspondre à un taux d'humidité, dans la deuxième chambre d'étanchéité 72, inférieur à une valeur souhaitée pour le fonctionnement du dispositif 10, 110.

Le procédé 200 comporte ensuite une sixième étape 220 telle que, si la deuxième caractéristique électrique 214 est à l'écart de ladite deuxième plage de valeurs 218, un deuxième signal est émis pour signaler une perte d'étanchéité de la deuxième chambre d'étanchéité 72.

Un procédé de fonctionnement du dispositif 10, 110 de connexion électrique va à présent être décrit. On considère que le dispositif 10, 110 est incorporé à un câble sous-marin (non représenté), ledit câble étant formé d'une pluralité de dispositifs similaires reliés en série. Plus précisément, on considère qu'une seconde extrémité (non représentée) de la ligne électrique 12, 112 du dispositif 10, 110 est reliée à un second connecteur (non représenté) similaire au connecteur 14, 114, permettant d'assembler en série les lignes électriques des dispositifs 10, 110 de connexion électrique.

On considère en outre que chacun des premier 18, 118 et deuxième 22, 122 modules de détection de chacun desdits dispositifs 10, 110 est relié au centre de commande 100, chacun desdits dispositifs 10, 110 étant ainsi identifiable et localisable sur le câble sous-marin.

Le câble sous-marin est immergé dans de l'eau sous pression, par exemple à une grande profondeur.

Le centre de commande 100 associé au câble sous-marin met en œuvre régulièrement les première 202 et deuxième 206 étapes, et éventuellement les quatrième 212 et cinquième 216 étapes, du procédé 200 décrit ci-dessus.

Si un taux d'humidité dans la première chambre d'étanchéité 71 du dispositif 10, 110 est inférieur à une valeur souhaitée, la première impédance entre le premier organe 77 de connexion électrique et l'armure 34 conduit la première caractéristique électrique 204 à être comprise dans la première plage de valeurs 208 définie ci-dessus. De même, si un taux d'humidité dans la deuxième chambre d'étanchéité 72 du dispositif 10, 110 est inférieur à une valeur souhaitée, la deuxième impédance entre le deuxième organe 86 de connexion électrique et le manchon 66 conduit la deuxième caractéristique électrique 214 à être comprise dans la deuxième plage de valeurs 218 définie ci-dessus.

En cas de fuite au niveau du premier 16 et/ou du deuxième 20 organe d'étanchéité, le taux d'humidité augmente dans la première 71 et/ou dans la deuxième 72 chambre d'étanchéité. Le taux d'humidité agit sur les propriétés du premier 76 et/ou du deuxième 85 élément hygrosensible.

Un taux d'humidité plus élevé dans la première chambre d'étanchéité 71 conduit à une variation de la première impédance définie ci-dessus, donc à une variation de la première caractéristique électrique 204. De même, un taux d'humidité plus élevé dans la deuxième chambre d'étanchéité 72 conduit à une variation de la deuxième impédance définie ci-dessus, donc à une variation de la deuxième caractéristique électrique 214.

Une variation significative du taux d'humidité correspondant conduit ainsi à la mise en œuvre de la troisième 210 et/ou de la sixième 220 étape du procédé 200 décrit ci-dessus. Le centre de commande 100 émet donc un signal de perte d'étanchéité au niveau de l'une et/ou de l'autre des chambres d'étanchéité 71, 72 du connecteur 14, 114 correspondant. Le signal est accompagné d'une localisation dudit connecteur 14, 114 sur le câble sous-marin, pour faciliter une intervention de maintenance ultérieure.

L'utilisation de modules de détection comprenant des éléments hygrosensibles 76, 85 confère une grande sensibilité à la détection, permettant de détecter de très faibles variations d'impédance. La sensibilité de la détection est encore améliorée par l'utilisation de signaux de réflectométrie hyperfréquence.

Le dispositif 10, 110 de connexion électrique décrit ci-dessus allie un système efficace de détection d'humidité à un encombrement réduit, sans ajout d'alimentation et de bus de communication supplémentaire.

Le dispositif 10, 110 de connexion électrique et le procédé 200 associé de détection d'une perte d'étanchéité permet ainsi d'optimiser le fonctionnement de câbles sous-marins à grande profondeur, en permettant de détecter et de localiser le plus tôt possible toute perte d'étanchéité.

## Revendications

1. Procédé (200) de détection d'une perte d'étanchéité d'un dispositif (10, 110) de connexion électrique, ledit dispositif de connexion électrique comprenant : une première ligne électrique (12, 112), s'étendant selon un axe principal (24) et comportant une première extrémité (26, 126) ; un connecteur (14, 114) électrique, assemblé à ladite première extrémité et apte à former jonction entre ladite première ligne électrique et une deuxième ligne électrique (61) ; et un premier organe d'étanchéité (16), disposé entre ladite première ligne électrique (12, 112) et ledit connecteur (14, 114) ;
la première ligne électrique, le connecteur et le premier organe d'étanchéité définissant une première chambre d'étanchéité (71) ;
**caractérisé en ce que** :
le dispositif de connexion électrique comprend en outre un premier module de détection (18, 118), apte à mesurer une première caractéristique électrique (204) du dispositif de connexion électrique, ledit premier module de détection comprenant un premier élément hygrosensible (76) disposé dans la première chambre d'étanchéité (71), le premier module de détection étant configuré de sorte que la première caractéristique électrique (204) mesurée par ledit premier module varie en fonction d'une humidité au contact du premier élément hygrosensible (76) ; et
le procédé comprend les étapes suivantes :
- mesure (202), par le premier module de détection (18, 118), de la première caractéristique électrique (204) du dispositif de connexion électrique ;
- comparaison (206) de la première caractéristique électrique mesurée à une première plage de valeurs (208) prédéterminée ; et
- si la première caractéristique électrique mesurée est à l'écart de ladite première plage de valeurs, émission (210) d'un premier signal de perte d'étanchéité du dispositif de connexion électrique.

2. Procédé de détection selon la revendication 1, dans lequel :
- le premier module de détection (18, 118) comprend en outre : un premier organe (77) de connexion électrique, disposé dans la première chambre d'étanchéité (71) au contact du premier élément hygrosensible (76) ; et un réflectomètre (74), relié au premier organe de connexion électrique ; et
- la mesure (202) de la première caractéristique électrique (204) comporte les étapes suivantes : envoi par le réflectomètre (74) d'un signal de sonde vers le premier organe (77) de connexion électrique ; réception d'un signal réfléchi, émis par le premier organe de connexion électrique vers le réflectomètre ; et comparaison dudit signal réfléchi avec le signal de sonde émis.

3. Procédé de détection selon la revendication 1 ou 2, dans lequel :
- le dispositif de connexion électrique comprend en outre un deuxième organe d'étanchéité (20), disposé entre la première ligne électrique (12, 112) et le connecteur (14, 114) ; la première ligne électrique, le connecteur et les premier (16) et deuxième (20) organes d'étanchéité définissant la première chambre d'étanchéité (71) ; la première ligne électrique, le connecteur et le deuxième organe d'étanchéité (20) définissant une deuxième chambre d'étanchéité (72), alignée avec la première chambre d'étanchéité selon l'axe principal (24) ;
- le dispositif de connexion électrique comprend en outre un deuxième module de détection (22, 122), apte à mesurer une deuxième caractéristique électrique (214) du dispositif de connexion électrique, ledit deuxième module de détection comprenant un deuxième élément hygrosensible (85) disposé dans la deuxième chambre d'étanchéité (72), le deuxième module de détection étant configuré de sorte que la deuxième caractéristique électrique (214) mesurée par ledit deuxième module varie en fonction d'une humidité au contact du deuxième élément hygrosensible (85) ; et
- le procédé comprend en outre les étapes suivantes :
- mesure (212), par le deuxième module de détection (22, 122), de la deuxième caractéristique électrique (214) du dispositif de connexion électrique ;
- comparaison (216) de la deuxième caractéristique électrique mesurée à une deuxième plage de valeurs (218) prédéterminée ; et
- si la deuxième caractéristique électrique mesurée est à l'écart de ladite deuxième plage de valeurs, émission (220) d'un deuxième signal de perte d'étanchéité du dispositif de connexion électrique.

4. Dispositif de connexion électrique comprenant : une première ligne électrique (12, 112), s'étendant selon un axe principal (24) et comportant une première extrémité (26, 126) ; un connecteur (14, 114) électrique, assemblé à ladite première extrémité et apte à former jonction entre ladite première ligne électrique et une deuxième ligne électrique (61) ; et un premier organe d'étanchéité (16), disposé entre ladite première ligne électrique et ledit connecteur ;
la première ligne électrique, le connecteur et le premier organe d'étanchéité définissant une première chambre d'étanchéité (71) ;
le dispositif de connexion électrique comprenant en outre un premier module de détection (18, 118), apte à mesurer une première caractéristique électrique du dispositif de connexion électrique, ledit premier module de détection comprenant un premier élément hygrosensible (76) disposé dans la première chambre d'étanchéité, le premier module de détection étant configuré de sorte que la première caractéristique électrique mesurée par ledit premier module varie en fonction d'une humidité au contact du premier élément hygrosensible (76) ;
le dispositif de connexion électrique étant configuré pour mettre en œuvre un procédé de détection d'une perte d'étanchéité selon l'une des revendications 1 à 3.

5. Dispositif de connexion électrique selon la revendication 4 prise en combinaison avec la revendication 3, comprenant en outre :
- un deuxième organe d'étanchéité (20), disposé entre la première ligne électrique (12, 112) et le connecteur (14, 114) ; la première ligne électrique, le connecteur et les premier (16) et deuxième (20) organes d'étanchéité définissant la première chambre d'étanchéité (71) ; la première ligne électrique, le connecteur et le deuxième organe d'étanchéité (20) définissant une deuxième chambre d'étanchéité (72), alignée avec la première chambre d'étanchéité selon l'axe principal (24) ; et
- un deuxième module de détection (22, 122), apte à mesurer une deuxième caractéristique électrique du dispositif de connexion électrique, ledit deuxième module de détection comprenant un deuxième élément hygrosensible (85) disposé dans la deuxième chambre d'étanchéité (72), le deuxième module de détection étant configuré de sorte que la deuxième caractéristique électrique mesurée par ledit deuxième module varie en fonction d'une humidité au contact du deuxième élément hygrosensible (85).

6. Dispositif de connexion électrique selon la revendication 4 ou 5 prise en combinaison avec la revendication 2, dans lequel le premier module de détection comprend en outre : un premier organe (77) de connexion électrique, disposé dans la première chambre d'étanchéité (71) au contact du premier élément hygrosensible (76) ; et un réflectomètre (74), relié au premier organe de connexion électrique.

7. Dispositif de connexion électrique selon la revendication 6, dans lequel : la première ligne électrique comporte au moins un câble électrique (38) et une armure (34) métallique, disposée autour de l'au moins un câble électrique ; le connecteur électrique (14, 114) comprend un manchon (66), électriquement conducteur, disposé selon l'axe principal (24), autour de la première extrémité (26, 126) de la première ligne électrique (12, 112) ; l'armure (34) métallique de la première ligne électrique est électriquement reliée au manchon (66) du connecteur électrique ; et le premier organe (77) de connexion électrique est disposé dans la première chambre d'étanchéité (71), autour de l'au moins un câble électrique (38) et à distance de l'armure (34) métallique de la première ligne électrique.

8. Dispositif de connexion électrique selon la revendication 7, dans lequel le premier élément hygrosensible (76) est disposé de sorte à maintenir une première impédance entre le premier organe (77) de connexion électrique et l'armure (34) métallique de la première ligne électrique, ladite première impédance étant variable en fonction d'une humidité au contact du premier élément hygrosensible (76), la première caractéristique électrique mesurée par le premier module de détection étant fonction de ladite première impédance.

9. Dispositif (10) de connexion électrique selon la revendication 8, dans lequel le premier module de détection (18) comprend en outre une première unité de connexion (78), ladite première unité de connexion comprenant deux bornes (82, 83) respectivement reliées au premier organe (77) de connexion électrique et à l'armure (34) métallique, ladite première unité de connexion (78) étant solidaire du manchon (66) du connecteur (14).

10. Dispositif (110) de connexion électrique selon la revendication 8, dans lequel le premier module de détection (118) comprend en outre un premier fil de connexion (142) s'étendant parallèlement à l'axe principal (24), l'armure (34) métallique de la première ligne électrique (112) étant disposée autour dudit premier fil de connexion (142) ; une première extrémité dudit fil de connexion étant reliée au premier organe (77) de connexion électrique.
